# EUROPÄISCHE PATENTSCHRIFT

(11) **EP 0 890 584 B1**
(45) Veröffentlichungstag und Bekanntmachung des Hinweises auf die Patenterteilung: **08.05.2002**
(21) Anmeldenummer: 98112262.5
(22) Anmeldetag: 02.07.1998
(51) Int. Cl.: C08F 10/06

(54) **Polypropylenwachs**
Polypropylene wax
Cire de polypropylène

(30) Priorität: 11.07.1997 DE 19729833
(43) Veröffentlichungstag der Anmeldung: 13.01.1999
(73) Patentinhaber: Clariant GmbH, 65929 Frankfurt am Main (DE)
(72) Erfinder: Herrmann, Hans-Friedrich, Dr., 64521 Gross-Gerau (DE); Hohner, Gerd, Dr., 86368 Gersthofen (DE)

(56) Entgegenhaltungen:
- EP-A- 0 321 852
- EP-A- 0 571 882
- EP-A- 0 602 509
- EP-A- 0 719 802

## Beschreibung

Die vorliegende Erfindung bezieht sich auf ein niederviskoses, hartes Polypropylen-Wachs, ein Verfahren zu dessen Herstellung sowie auf dessen Verwendung.

Der thermische Abbau von isotaktischem Polypropylen ergibt harte PP-Wachse, ist allerdings energieaufwendig und führt zu teilweise verfärbten Produkten welche Doppelbindungen enthalten.

Die Polymerisation von Propen mit Ziegler-Natta Katalysatoren (EP-A-584 586, DE-A-23 29 641) erfordert hohe Mengen Wasserstoff und ist hierdurch ebenfalls auf höherviskose Wachse beschränkt.

Die Herstellung von 1-Olefinpolymerwachsen mit enger Molmassenverteilung und hoher Isotaktizität mit Metallocenen ist bekannt. Die entstehenden Produkte bleiben jedoch auch bei der Regelung durch hohe Wasserstoff-Pegel oberhalb einer Schmelzviskosität von 100 mPas (EP-A-321 852).

EP-A-321 853 beschreibt die Verwendung von Metallocen-Katalysatoren zur Herstellung von niedermolekularen PP-Wachsen. Die entstehenden Produkte besitzen jedoch eine geringe Isotaxie von kleiner 70 %.

Darüber hinaus gibt es Metallocene (EP-A-416 566) welche in Abhängigkeit von der Polymerisationstemperatur zur Herstellung von Polypropylen von unterschiedlichem Molekulargewicht verwendet wurden. Das mittlere Molekulargewicht sinkt durch die Erhöhung der Polymerisationstemperatur. Die nach diesem Verfahren hergestellten Produkte besitzen ungesättigte Kettenenden und sind hierdurch in der Anwendung thermisch wenig stabil.

Die Aufgabe bestand somit darin, sehr niedrigviskose Polypropylen-Wachse von hoher Härte und guter Temperaturstabilität herzustellen.

Es wurde gefunden, daß durch Polymerisation von Propen zusammen mit Comonomeren unter Verwendung von Metallocenen bei zusätzlicher Verwendung von Wasserstoff neuartige niedermolekulare PP-Wachse herstellbar sind. Diese besitzen eine Schmelzviskosität von 90 mPas oder weniger bei 170 °C und haben keine ungesättigten oder polaren Gruppen in der Kette, welche Verfärbungs- und Vernetzungsreaktionen fördern können. Bevorzugt besitzen die Polypropylen-Homopolymerwachse eine Isotaxie von größer 70 % und eine Schmelzwärme von größergleich 80 J/g um eine hohe Härte zu gewährleisten.

Die Anmeldung betrifft daher mit Metallocenen hergestellte harte PP-Homopolymerund PP Copolymer-Wachse mit gesättigten Kettenenden, wobei das Wachs keine oder weniger als 10 % ungesättigte Endgruppen besitzt, einer Schmelzviskosität von 90 mPas oder weniger gemessen bei 170 °C und einem isotaktischen Index größer gleich 70 % sowie deren Verwendung.

Es wurde weiter gefunden, daß diese neuartigen Wachse in vielfältigen Einsatzgebieten vorteilhaft anwendbar sind. Sie erlauben als Komponente in Tonern durch ihre niedrige Viskosität eine gute Mischbarkeit bei der Toner Herstellung. Niedrigviskose PP-Wachse finden daher in besonderer Weise Anwendung für den Einsatz als Komponente in Schwarz und Farb-Tonern in Photokopierern und Laserdruckern.

In gleicher Weise sind diese Wachse vorteilhaft einsetzbar zur Herstellung von Druckfarben, in Lacken und als Komponente in Schmelzklebern.

Sofern pulverförmige Mischungen hergestellt werden sollen, erlaubt die hohe Kristallinität der Wachse eine leichte Mahlbarkeit der Mischung und vermeidet ein Verkleben der Pulver wie dies bei Verwendung niedrigisotaktischer Wachse regelmäßig zu beobachten ist.

In allen Anwendungen wird eine Verfärbung oder Vernetzung der Schmelze vermieden, wodurch für den Anwender auch bei hohen Temperaturen und langen Wartezeiten in Verarbeitungsmaschinen keine Veränderung der Wachsschmelze erfolgt.

Aus diesem Grund ist die Verwendung der so hergestellten Wachse als Hilfsmittel in der Kunststoffverarbeitung, zum Beispiel als Gleitmittel sehr vorteilhaft. Insbesondere vorteilhaft ist die Verwendung bei der Herstellung von Masterbatches, zum Beispiel von Pigmenten oder Farbstoffen zur Polymer-Einfärbung. Die niedrige Viskosität der Wachsschmelze ermöglicht eine verbesserte Benetzung und Dispergierung der Farbträger und erhöht dadurch die Farbausbeute und Intensität.

Bevorzugt sind Polyolefin-Wachse, hergestellt durch die Verwendung von Sandwich-Chelat-Verbindungen, insbesondere solche hergestellt durch die Verwendung von Metallocen-Verbindungen, dadurch gekennzeichnet, daß das Metallocen eine Verbindung der Formel I darstellt:

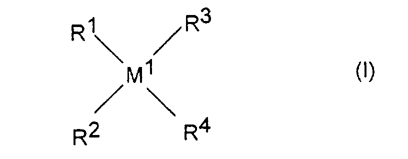

Diese Formel umfaßt auch Verbindungen der Formel Ia 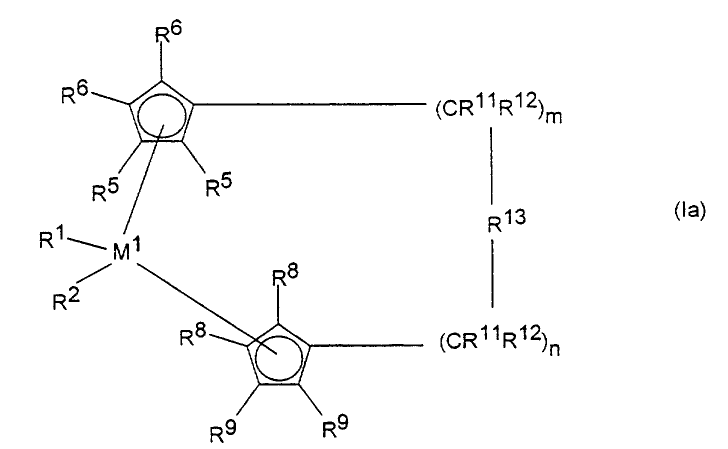 und der Formel Ib

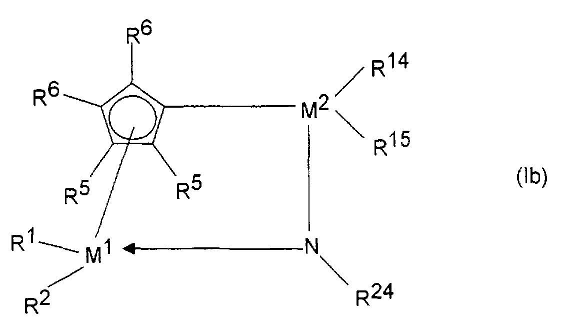

In den Formeln I, Ia und Ib ist M¹ ein Metall der Gruppe IVb, Vb oder Vlb des Periodensystems, beispielsweise Titan, Zirkon, Hafnium, Vanadium, Niob, Tantal, Chrom, Molybdän, Wolfram, vorzugsweise Titan, Zirkon und Hafnium.

R¹ und R² sind gleich oder verschieden und bedeuten ein Wasserstoffatom, eine C₁-C₁₀-, vorzugsweise C₁-C₃-Alkylgruppe, insbesondere Methyl, eine C₁-C₁₀-, vorzugsweise C₁-C₃-Alkoxygruppe, eine C₆-C₁₀- vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogenatom, vorzugsweise Chlor.

R³ und R⁴ sind gleich oder verschieden und bedeuten einen ein- oder mehrkernigen Kohlenwasserstoffrest, welcher mit dem Zentralatom M¹ eine Sandwichstruktur bilden kann. Bevorzugt sind R³ und R⁴ Cyclopentadienyl, Indenyl, Benzoindenyl oder Fluorenyl, wobei die Grundkörper noch zusätzliche Substituenten tragen oder miteinander verbrückt sein können. Außerdem kann einer der Reste R³ und R⁴ ein substituiertes Stickstoffatom sein, wobei R²⁴ die Bedeutung von R¹⁷ hat und vorzugsweise Methyl, t-Butyl oder Cyclohexyl ist.

R⁵, R⁶, R⁸ **und** R⁹ sind gleich oder verschieden und bedeuten ein Wasserstoffatom, ein Halogenatom, vorzugsweise ein Fluor-, Chlor- oder Bromatom, eine C₁-C₁₀-, vorzugsweise C₁-C₄-Alkylgruppe, eine C₆-C₁₀-, vorzugsweise C₆-C₈-Arylgruppe, eine C₁-C₁₀-, vorzugsweise C₁-C₃-Alkoxygruppe, einen -NR¹⁶₂-, -SR¹⁶-, -OSiR¹⁶₃-, -SiR¹⁶₃- oder -PR¹⁶₂-Rest, worin R¹⁶ eine C₁-C₁₀-, vorzugsweise C₁-C₃-Alkylgruppe oder C₆-C₁₀-, vorzugsweise C₆-C₈-Alkylgruppe, oder im Falle Si oder P enthaltender Reste auch ein Halogenatom, vorzugsweise Chloratom, ist, oder je zwei benachbarte Reste R⁵, R⁶, R⁸ **oder** R⁹ bilden mit den sie verbindenden C-Atomen einen Ring. Besonders bevorzugte Liganden sind die substituierten Verbindungen der Grundkörper Indenyl, Benzoindenyl, Fluorenyl und Cyclopentadienyl.

R¹³ ist 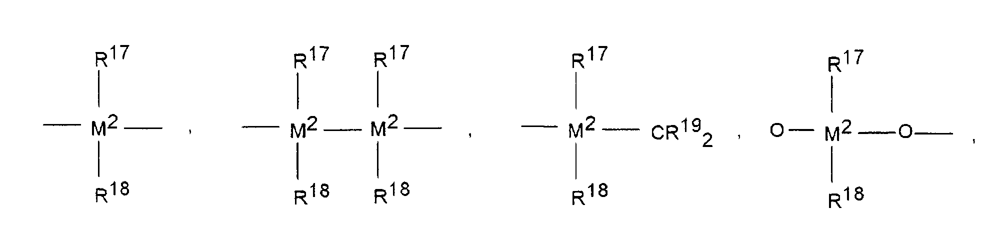 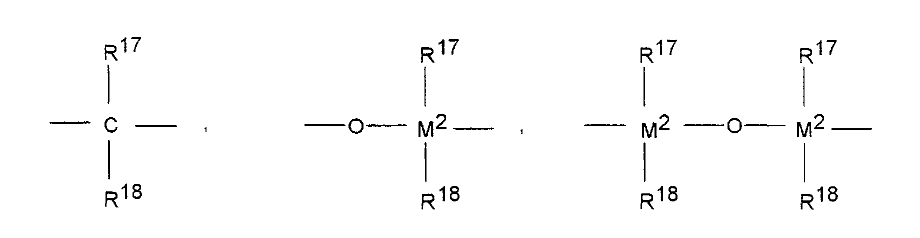 =BR¹⁷, =AlR¹⁷, -Ge-, -Sn-, -O-, -S-, =SO, =SO₂, =NR¹⁵, =CO, =PR¹⁵ oder =P(O)R¹⁵, wobei R¹⁷, R¹⁸ und R¹⁹ gleich oder verschieden sind und ein Wasserstoffatom, ein Halogenatom, eine C₁-C₃₀-, vorzugsweise C₁-C₄-Alkylgruppe, insbesondere Methylgruppe, eine C₁-C₁₀-Fluoralkylgruppe, vorzugsweise CF₃-Gruppe, eine C₆-C₁₀-Fluorarylgruppe, vorzugsweise Pentafluorphenylgruppe, eine C₆-C₁₀-, vorzugsweise C₆-C₈-Arylgruppe, eine C₁-C₁₀, vorzugsweise C₁-C₄-Alkoxygruppe, insbesondere Methoxygruppe, eine C₂-C₁₀-, vorzugsweise C₂-C₄-Alkenylgruppe, eine C₇-C₄₀-, vorzugsweise C₇-C₁₀-Arylalkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R¹⁷ und R¹⁸ oder R¹⁷ und R¹⁹ bilden jeweils zusammen mit den sie verbindenden Atomen einen Ring.

M² ist Silizium, Germanium oder Zinn, bevorzugt Silizium und Germanium. R¹³ ist vorzugsweise =CR¹⁷R¹⁸, =SiR¹⁷R¹⁸, =GeR¹⁷R¹⁸, -O-, -S-, =SO, =PR¹⁷ oder =P(O)R¹⁷.

R¹¹ und R¹² sind gleich oder verschieden und haben die für R¹⁷ genannte Bedeutung. m und n sind gleich oder verschieden und bedeuten null, 1 oder 2, bevorzugt null oder 1, wobei m plus n null, 1 oder 2, bevorzugt null oder 1 ist.

R¹⁴ und R¹⁵ haben die Bedeutung von R¹⁷ und R¹⁸.

Beispiele für geeignete Metallocene sind die rac-lsomeren von:
Ethylen-bis-1-(2-methyl-tetrahydroindenyl)-zirkoniumdichlorid,
Ethylen-bis-1-(4,7-dimethyl-indenyl)zirkoniumdichlorid,
Ethylen-bis-1-(2-methyl-4-phenylindenyl)zirkoniumdichlorid,
Ethylen-bis-1-(2-methyl-4,5-benzoindenyl)zirkoniumdichlorid,
Ethylen-bis-1-(2-methyl-4,5-benzo-6,7-dihydroindenyl)zirkoniumdichlorid,
Ethylen-bis-1-(2-methyl-indenyl)zirkoniumdichlorid,
Ethylen-bis-1-tetrahydroindenylzirkoniumdichlorid,
sowie jeweils die Alkyl- oder Aryl-Derivate dieser Metallocendichloride.

Zur Aktivierung der Einzentren-Katalysatorsysteme werden geeignete Cokatalysatoren eingesetzt. Geeignete Cokatalysatoren für Metallocene der Formel I sind aluminiumorganische Verbindungen, insbesondere Alumoxane oder auch aluminiumfreie Systeme wie R²²ₓNH₄₋ₓBR²³₄, R²²ₓPH₄₋ₓBR²³₄, R²²₃CBR²³₄ oder BR²³₃. In diesen Formeln bedeutet x eine Zahl von 1 bis 4, die Reste R²² sind gleich oder verschieden, bevorzugt gleich, und bedeuten C₁-C₁₀-Alkyl oder C₆-C₁₈-Aryl oder zwei Reste R²² bilden zusammen mit dem sie verbindenden Atom einen Ring, und die Reste R²³ sind gleich oder verschieden, bevorzugt gleich, und stehen für C₆-C₁₈-Aryl, das durch Alkyl, Haloalkyl oder Fluor substituiert sein kann. Insbesondere steht R²² für Ethyl, Propyl, Butyl oder Phenyl und R²³ für Phenyl, Pentafluorphenyl, 3,5-Bistrifluormethylphenyl, Mesityl, Xylyl oder Tolyl.

Diese Cokatalysatoren sind insbesondere geeignet in Kombination mit Metallocenen der Formel I, wenn R¹ und R² eine C₁-C₁₀-Alkylgruppe oder eine Aryl- oder Benzylgruppe, vorzugsweise Methylgruppe, bedeuten. Die Derivatisierung zu den Metallocenen der Formel I kann nach literaturbekannten Methoden, beispielsweise durch Umsetzung mit Alkylierungsmitteln wie Methyllithium erfolgen (vgl. Organometallics 9 (1990) 1359; J. Am. Chem. Soc. 95 (1973) 6263).

Zusätzlich ist häufig eine dritte Komponente erforderlich, um einen Schutz vor polaren Katalysator-Giften aufrecht zu erhalten. Hierzu sind aluminiumorganische Verbindungen, wie z. B. Triethylaluminium, Tributylaluminium und andere sowie Mischungen geeignet.

Je nach Verfahren können auch geträgerte Einzentren-Katalysatoren zur Verwendung kommen. Bevorzugt sind Katalysatorsysteme, bei welchen die Restgehalte von Trägermaterial und Cokatalysator eine Konzentration von 100 ppm im Produkt nicht überschreiten.

Zur Herstellung der erfindungsgemäßen Wachse wird Propen in Gegenwart von Wasserstoff sowie optional weiterer Olefine oder Diolefine mit 2 bis 18 C-Atomen als Comonomere polymerisiert. Beispiele für verwendbare Comonomere sind Ethylen, 1-Buten, 1-Penten, 1-Hexen, 1-Octen, 2-Methyl-1-propen, 3-Methyl-1-buten, 3-Methyl-1-penten, 4-Methyl-1-penten, 4-Methyl-1-hexen, Styrol oder cyclischen Olefine wie Cyclopenten, Cyclohexen, Norbornen, 1,4,5,8-Dimethano-1,2,3,4,4a,5,8,8a-octahydronaphthalin und deren strukturellen Abkömmlingen sowie Diolefine wie 1,5-Hexadien, 1,7-Octadien, 1,3- oder 1,5-Cyclooctadien. Bevorzugt ist die Polymerisation von Propylen sowie die Copolymerisation von Propylen mit einem 1-Olefin mit 2 bis 10 Kohlenstoffatomen. Beispiele für Copolymerwachse sind Propylen/Ethylen-, Propylen/1-Buten- und Propylen/1-Hexen-Wachse.

Beispiele für Terpolymere sind Propylen/Ethylen/1-Buten- oder Propylen/Ethylen/1,5-Hexadien-Terpolymerwachse.

Copolymerwachse enthalten 0 bis 20 Gew.-% des Comonomers bezogen auf das Gesamtpolymer. Terpolymerwachse enthalten mindestens 80 Gew.% des Hauptmonomers, wobei die beiden Comonomere jeweils bis zu 19 Gew.%, in Summe beider Comonomere jedoch maximal 20 Gew.% am Gesamtpolymer enthalten sind.

Die erfindungsgemäßen Wachse enthalten weniger als 10 % ungesättigte Endgruppen, bevorzugt weniger als 5 % ungesättigte Endgruppen.

Die nach diesem Verfahren hergestellten isotaktischen Polypropylen-Homopolymerwachse besitzen eine Isotaxie von größer 70 % und eine Schmelzwärme ΔH von größergleich 80 J/g um eine hohe Härte zu gewährleisten.

Die erfindungsgemäßen Wachse können in jedem geeigneten Reaktor-Typ hergestellt werden, wie ein Loop-Reaktor, Autoklav oder Gasphase. Die Regelung des Molekulargewichts erfolgt bevorzugt nicht über die Variation der Polymerisationstemperatur, sondern bei konstanter Temperatur durch Veränderung des Wasserstoff-Drucks.

Die für die Anwendung der erfindungsgemäßen Wachse kennzeichnende Eigenschaft für die Kettenlänge ist die Viskosität in der Schmelze bei 170 °C von 90 mPas oder weniger.

### Beispiele:

In den nachstehenden Beispielen werden folgende Abkürzungen verwendet:
- DSC =: Differential Scanning Calorimetry
- GPC =: Gel-Permeations-Chromatographie
- GC =: Gaschromatographie
- Mw =: Molmassengewichtsmittel in g/mol nach GPC
- Mn =: Molmassenzahlenmittel in g/mol nach GPC
- Mw/Mn =: Polydispersität

Schmelzpunkte (Smp) und Schmelzwärmen (ΔH) wurden durch DSC-Messungen mit einem "Perkin-Elmer DSC 7" bei 10 °C/min Aufheiz- und Abkühlrate aus dem 2. Aufheizen bestimmt.
Die Schmelzviskositäten (SV) sind bei 170 °C mit einem Rotationsviskosimeter bestimmt worden.
Die Bestimmung des Isotaktischen Index (1.1.) erfolgt durch IR-Spektroskopie nach J. P. Luongo, J. Appl. Polym. Chem., 3, 302 (1960).
Die Untersuchung der Kettenenden der Polymere erfolgt über ¹³C-NMR wie in Polymer, 1989, Vol. 30, S. 428. beschrieben. Sofern weniger als 10 % aller Endgruppen als isopropenyl Endgruppen vorliegen, findet sich in Tabelle 1 die Angabe "gesättigt".

### Beispiel 1:

In einem inerten 100 dm³-Reaktor wurden 30 kg Propen, 12 mmol Triisobutylaluminium vorgelegt, unter Rühren auf 70 °C temperiert und 1,0 bar Wasserstoff zudosiert.
Parallel hierzu werden 31 mg Ethylen-bis-1,1'-(tetrahydroindenyl)zirkondichlorid in 15 ml 10 Gew.% toluolischer Lösung von Methylaluminoxan gelöst und gerührt. Die Polymerisation wird durch portionsweise Zugabe der Katalysator-Lösung gestartet und die Innentemperatur des Reaktors auf 70 °C geregelt. Wasserstoff wurde gemäß GC-Kontrolle nachdosiert und auf den Anfangswert konstant gehalten. Nach 1 Stunde wurde die Polymerisation durch Zugabe von CO₂ gestoppt, der Reaktor entspannt und das Produkt als Schmelze abgelassen. Es resultieren 12,1 kg PP-Wachs. Die GPC-Messung ergibt ein M_{w} von 3528 und M_{w}/Mₙ gleich 2,1. Die Eigenschaften sind in Tabelle 1 zusammengefaßt.

### Vergleichsbeispiel 1:

Beispiel 1 wurde wiederholt, jedoch kein Wasserstoff dosiert. Die Eigenschaften sind in Tabelle 1 zusammengefaßt. Die GPC-Messung ergibt ein M_{w} von 12640 und M_{w}/Mₙ gleich 2,5.

### Beispiel 2:

Beispiel 1 wurde mit 83 mg Ethylen-bis-1,1'-(4,7-dimethylindenyl)zirkondichlorid durchgeführt, wobei 100 mbar Wasserstoff verwendet wurden. Es resultieren 9,7 kg PP-Wachs. Die GPC-Messung ergibt ein M_{w} von 5346 und M_{w}/Mₙ gleich 2,7. Die Eigenschaften sind in Tabelle 1 zusammengefaßt.

### Beispiel 3:

Beispiel 1 wurde mit 60 mg Ethylen-bis-1,1'-(2-methyltetrahydroindenyl)zirkondichlorid durchgeführt, wobei 0,3 bar Wasserstoff verwendet wurden. Es resultieren 13,7 kg PP-Wachs. Die GPC-Messung ergibt ein M_{w} von 6450 und M_{w}/Mₙ gleich 2,5. Die Eigenschaften sind in Tabelle 1 zusammengefaßt.

### Beispiel 4:

Beispiel 1 wurde mit 100 mg Ethylen-bis-1,1'-(2-methylindenyl)zirkondichlorid durchgeführt, wobei 2,5 bar Wasserstoff verwendet wurden. Es resultieren 13,3 kg PP-Wachs. Die GPC-Messung ergibt ein M_{w} von 6110 und M_{w}/Mₙ gleich 2,1. Die Eigenschaften sind in Tabelle 1 zusammengefaßt.

### Beispiel 5:

Beispiel 1 wurde mit 11 mg Ethylen-bis-1,1'-(2-methyl-4-phenylindenyl)zirkondichlorid durchgeführt, wobei 2,5 bar Wasserstoff verwendet wurden. Es resultieren 12,2 kg PP-Wachs. Die GPC-Messung ergibt ein M_{w} von 5591 und M_{w}/Mₙ gleich 2,27. Die Eigenschafte sind in Tabelle 1 zusammengefaßt.

### Beispiel 6:

Beispiel 1 wurde mit 50 mg wiederholt, wobei 0,2 bar Wasserstoff und 0,8 bar Ethylen dosiert wurden. Es resultieren 16,2 kg Propylen/Ethylen-Copolymerwachs. Die GPC-Messung ergibt ein M_{w} von 4665 und M_{w}/Mₙ gleich 2,05. Die Eigenschaften sind in Tabelle 1 zusammengefaßt.

### Beispiel 7:

Die Wachse aus den vorangegangenen Beispielen wurden im Trockenschrank bei 200 °C 4 h unter Luftzutritt getempert. Nach dem Abkühlen der Proben wurde die Verfärbung anhand eines Satzes von Vergleichsmustern vorgenommen (Note 1: farblos, Note 6: dunkelbraun). Die Ergebnisse der Temperversuche (Tabelle 1) zeigen, daß Wachse hergestellt unter Gegenwart von Wasserstoff eine verbesserte Thermostabilität besitzen.

**Tabelle 1:**

| Bsp. | Typ | SV (170 °C) | Smp[°C] | ΔH [J/g] | I.I. | Kettenende | Farbnote |
|---|---|---|---|---|---|---|---|
| 1 | C3-Homo | 30 | 122 | 91 | 86 | gesättigt | 1 - 2 |
| V1 | C3-Homo | 443 | 121 | 94 | 83,7 | ungesättigt | 5 - 6 |
| 2 | C3-Homo | 55 | 127 | 81 | 79 | gesättigt | 1 |
| 3 | C3-Homo | 90 | 118 | 80 | 79 | gesättigt | 1 |
| 4 | C3-Homo | 89 | 134 | 82 | 77,2 | gesättigt | 2 |
| 5 | C3-Homo | 75 | 155 | 125 | 97 | gesättigt | 1 - 2 |
| 6 | C3/C2-Copo. | 41 | 108 | 72 | 75 | gesättigt | 1 |

## Patentansprüche

1. Polypropylen-Homopolymer und Copolymer-Wachse, **dadurch gekennzeichnet, dass** sie durch Polymerisation unter Verwendung von Metallocen-Verbindungen in Gegenwart von Wasserstoff hergestellt wurden und eine Schmelzviskosität von 90 mPas oder weniger, gemessen bei 170 °C, aufweisen, mit der Maßgabe, dass die Schmelzwärme der Homopolymeren größer oder gleich 80 J/g und der isotaktische Index größer 70 % ist.

2. Polypropylen-Homopolymer und Copolymer-Wachse gemäß Anspruch 1, **dadurch gekennzeichnet, dass** sie weniger als 10 % ungesättigte Kettenenden aufweisen.

3. Verfahren zur Herstellung von Wachsen nach Anspruch 1 oder 2, **dadurch gekennzeichnet, dass** Ethylen-verbrückte stereorigide Metallocene eingesetzt werden.

4. Verwendung der Wachse nach Anspruch 1 oder 2 zur Herstellung von Tonern.

5. Verwendung der Wachse nach Anspruch 1 oder 2 zur Kunststoffverarbeitung und zur Herstellung von Masterbatches.

6. Verwendung der Wachse nach Anspruch 1 oder 2 zur Herstellung von Druckfarben, in Lacken und als Komponente in Schmelzklebern

## Claims

1. A polypropylene homopolymer or copolymer wax which has been prepared by polymerization using metallocene compounds in the presence of hydrogen and has a melt viscosity of not more than 90 mPas, measured at 170°C, with the proviso that the heat of fusion of the homopolymer is not less than 80 J/g and the isotactic index is greater then 70%.

2. A polypropylene homopolymer or copolymer wax as claimed in claim 1 which has less than 10% of unsaturated chain ends.

3. A process for preparing waxes as claimed in claim 1 or 2, wherein ethylene-bridged stereorigid metallocenes are used.

4. The use of waxes as claimed in claim 1 or 2 for producing toners.

5. The use of waxes as claimed in claim 1 or 2 for plastics processing and for producing masterbatches.

6. The use of waxes as claimed in claim 1 or 2 for producing printing inks, in surface coatings and as a component in hotmelt adhesives.

## Revendications

1. Cires d'homopolymère et de copolymère de polypropylène **caractérisées en ce qu'**elles sont préparées par polymérisation en utilisant des composés de type métallocènes en présence d'hydrogène et qui présentent une viscosité de fusion à chaud de 90 mPas ou moins, mesurée à 170°C, à condition que la chaleur de fusion des homopolymères soit supérieure ou égale à 80 J/g et que l'indice d'isotacticité soit supérieur à 70 %.

2. Cires d'homopolymère et de copolymère de polypropylène selon la revendication 1, **caractérisées en ce qu'**elles présentent moins de 10 % d'extrémités de chaîne insaturées.

3. Procédé de fabrication de cires selon la revendication 1 ou 2, **caractérisé en ce qu'**on utilise des métallocènes stéréorigides pontés par l'éthylène.

4. Utilisation des cires selon la revendication 1 ou 2 pour la fabrication de toners.

5. Utilisation des cires selon la revendication 1 ou 2 pour le traitement de matières synthétiques et pour la préparation d'un mélange-maître.

6. Utilisation des cires selon la revendication 1 ou 2 pour la fabrication d'encres d'imprimerie, de vernis et comme composants dans des adhésifs de fusion.
